# DEMANDE DE BREVET EUROPEEN

(11) **EP 4 467 394 A1**
(43) Date de publication de la demande: **27.11.2024**
(21) Numéro de dépôt: 24176353.1
(22) Date de dépôt: 16.05.2024
(51) Int. Cl.: B60R 9/045, B60R 9/058

(54) **VÉHICULE ÉQUIPÉ DE BARRES DE TOIT MODULABLES ET INVIOLABLES**

(30) Priorité: 24.05.2023 FR 2305129
(71) Demandeur: Renault s.a.s, 92100 Boulogne Billancourt (FR)
(72) Inventeur: ZAMBAL, Tiberiu, 062203 BUCAREST (RO)

(57) **Abrégé**

L'invention concerne un véhicule possédant deux barres (1) de toit ayant chacune deux points de fixation (2, 3) audit toit. Chaque point de fixation (2, 3) fait intervenir une poignée de fixation (4) monté en rotation autour d'un axe de rotation (5) de la barre (1) de toit, et un pion de montage (6) solidarisé au toit.

La poignée de fixation (4) comporte une extrémité de liaison (13) arrondie possédant deux lèvres périphériques (15, 16), et le pion de montage (6) présente deux parois parallèles (10, 12) entre lesquelles sont placées lesdites deux lèvres (15, 16). La hauteur des deux lèvres (15, 16) varie progressivement d'une extrémité à l'autre desdites lèvres (15, 16). De cette manière, la poignée de fixation (4) peut passer par rotation, d'une position de verrouillage pour laquelle le tronçon desdites deux lèvres (15, 16) qui est placé entre les deux parois parallèles (10, 12) possèdent une hauteur importante et est coincé entre les deux parois parallèles (10, 12), à une position de déverrouillage pour laquelle lesdites deux lèvres (15, 16) ne sont plus placées entre lesdites deux parois parallèles (10, 12).

## Description

La présente invention concerne un véhicule équipé de barres de toit modulables et inviolables.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Dans la description qui va suivre, les termes « barre » et « barre de toit » sont équivalents.

Actuellement, certains véhicules automobiles possèdent deux barres de toit parallèles, s'étendant de chaque côté du toit suivant un axe longitudinal X du véhicule, et fixées sur ledit toit. Pour une partie de ces véhicules, ces barres peuvent être démontées et/ou déplacées pour pouvoir être ensuite fixées sur le toit de manière à s'étendre suivant un axe transversal Y du véhicule. Autrement dit, pour cette nouvelle configuration, les deux barres se retrouvent sur le toit en étant parallèles l'une à l'autre, et placées l'une derrière l'autre en s'étendant chacune suivant un axe transversal Y du véhicule. Ce nouvel arrangement des barres apparait comme une solution supplémentaire permettant d'élargir les possibilités d'arrimage d'objets sur le toit du véhicule, tels que par exemple des bagages, des vélos etc.

Or, le passage des barres de toit d'une configuration à l'autre est souvent compliqué, car il entraine la mise en oeuvre de manipulations compliquées nécessitant plus souvent un outillage spécifique et certains efforts contraignants. De plus, ces barres de toit sont accessibles par n'importe qui depuis l'extérieur du véhicule, et peuvent être facilement volées sans avoir à fracturer le véhicule.

Un véhicule selon l'invention possède des barres de toit conçues pour occuper, soit une position longitudinale pour laquelle elles s'étendent suivant un axe longitudinal X du véhicule, soit une position transversale pour laquelle elles s'étendent suivant un axe transversal Y de celui-ci, au moyen de manipulations simples ne nécessitant aucun outillage spécifique.

L'invention a pour objet un véhicule comprenant un toit, une première barre et une deuxième barre fixées chacune sur ledit toit, lesdites deux barres étant déplaçables entre une position longitudinale pour laquelle elles s'étendent chacune suivant un axe longitudinal X du véhicule et une position transversale pour laquelle elles s'étendent chacune suivant un axe transversal Y du véhicule.

Selon l'invention :
- chacune des barres est fixée au toit par l'intermédiaire d'au moins un pion de montage solidarisé au toit et s'étendant verticalement, une zone supérieure dudit pion de montage se terminant par deux parois parallèles et écartées s'étendant horizontalement, ladite zone supérieure émergeant dudit toit,
- chaque barre comporte une poignée de fixation allongée dont une extrémité de liaison arrondie est montée en rotation autour d'un axe de rotation horizontal de la barre, ladite extrémité de liaison arrondie comportant deux lèvres périphériques et parallèles en forme d'arc de cercle, lesdites deux lèvres ayant une hauteur variant progressivement entre une première extrémité pour laquelle la hauteur est minimale et une deuxième extrémité pour laquelle la hauteur est maximale, la poignée de fixation coopérant avec le pion de montage de sorte que les deux lèvres soient insérées dans un espace d'accueil ménagé entre les deux parois parallèles de la zone supérieure du pion,
ladite poignée de fixation pouvant passer par pivotement autour de l'axe de rotation d'une position de verrouillage pour laquelle un tronçon des deux lèvres compris entre la première extrémité et la deuxième extrémité est inséré à force dans l'espace d'accueil, à une position de déverrouillage pour laquelle les deux lèvres ont pivoté autour dudit axe de rotation jusqu'à ce que les premières extrémités desdites deux lèvres se retrouvent à l'extérieur dudit espace d'accueil.

Le principe d'un véhicule selon l'invention est de mettre en oeuvre un pion de montage solidarisé au toit du véhicule et une poignée de fixation montée en rotation dans une barre de toit, ladite poignée possédant une extrémité de liaison arrondie qui est assimilable à un excentrique. En effet le rayon de cette extrémité de liaison arrondie, considéré entre le centre de l'axe de rotation et un bord supérieur des lèvres périphériques et parallèles, est variable le long de la circonférence de cette extrémité de liaison. Lorsque la poignée de fixation est dans la position de verrouillage, les deux lèvres sont insérées entre les deux parois parallèles et horizontales du pion de montage, au niveau d'un tronçon occupant intégralement l'espace d'accueil situé entre lesdites deux parois parallèles et horizontales du pion de montage. Autrement dit, ledit tronçon desdites deux lèvres est coincé entre ces deux parois parallèles et horizontales permettant d'arrimer solidement la barre de toit au toit. Lorsque la poignée de fixation amorce une rotation depuis cette position de verrouillage pour atteindre la position de déverrouillage, les deux lèvres périphériques et parallèles se déplacent simultanément puisqu'elles sont solidarisées à l'extrémité de liaison arrondie, ledit déplacement s'effectuant relativement aux deux parois parallèles et horizontales du pion de montage. Au fur et à mesure de ce déplacement, la hauteur des lèvres situées entre lesdites deux parois horizontales et parallèles diminue progressivement de sorte que lesdites deux lèvres n'occupent plus l'intégralité de l'espace d'accueil situé lesdites deux parois parallèles et horizontales. Le mouvement de rotation de la poignée de fixation se poursuit jusqu'à ce que la première extrémité desdites deux lèvres sorte dudit espace d'accueil signifiant que la position de déverrouillage a été atteinte. Plus rien ne retient alors la barre contre ledit toit, ladite barre pouvant alors être retirée facilement et sans effort dudit toit.

Selon une caractéristique possible de l'invention, les deux parois parallèles et écartées de la zone supérieure du pion de montage sont constituées d'une paroi supérieure et d'une paroi inférieure qui est placée en-dessous de la paroi supérieure, lesdites deux parois étant de forme cylindrique, le diamètre de la paroi supérieure étant inférieur à celui de la paroi inférieure.

Selon une caractéristique possible de l'invention, chaque lèvre possède une section transversale rectangulaire.

Selon une caractéristique possible de l'invention, la poignée de fixation est rectiligne, et dans la position de verrouillage ladite poignée de fixation s'étend horizontalement en arasant une surface supérieure de la barre sans laisser subsister de jeu avec ladite surface supérieure. De cette manière, une fois que la poignée de fixation est dans la position de verrouillage, il n'est plus possible de glisser les doigts entre ladite poignée et la barre de toit pour tenter de s'en saisir afin de déverrouiller la barre de toit. Le fait que la poignée de fixation arase une surface supérieure de la barre signifie que la poignée de fixation se retrouve dans la parfaite continuité de ladite surface supérieure sans introduire un quelconque relief entre les deux. Lorsque la poignée est dans la position de verrouillage, un individu ne pas saisir ladite poignée, puisqu'il ne subsiste aucun espace entre cette poignée et la barre de toit sur laquelle elle est montée. Cette position de verrouillage de la poignée rend la barre de toit inviolable.

Selon une caractéristique possible de l'invention, la poignée comprend une gâche et la barre comprend une serrure sous la forme d'une pièce cylindrique mobile en rotation et prolongé par une paroi incurvée formant un crochet, une clé spécifique et personnelle introduite dans la serrure permettant de faire pivoter la pièce cylindrique de sorte que la paroi incurvée vienne se placer sur ladite gâche lorsque la poignée est dans la position de verrouillage, avant que ladite clé ne soit retirée. La gâche et la serrure sont destinées à rendre la barre de toit inviolable. En effet, une fois que la paroi incurvée de la serrure est placée au-dessus de la gâche de la poignée de fixation, la clé spécifique est retirée de la serrure laissant la poignée de fixation bloquée dans la position de verrouillage. Le terme « personnelle » attribuée à la clé, signifie que seule le propriétaire du véhicule détient ladite clé.

Selon une caractéristique possible de l'invention, la pièce cylindrique mobile formant la serrure présente une extrémité qui émerge de la barre, la clé spécifique et personnelle étant conçue pour coopérer avec ladite extrémité émergeante pour libérer ou bloquer la poignée de fixation se trouvant dans la position de verrouillage. En effet, la clé va permettre de provoquer une rotation de la pièce cylindrique mobile dans un sens ou dans l'autre, pour libérer ou bloquer la poignée de fixation dans la position de verrouillage.

Selon une caractéristique possible de l'invention, l'extrémité de liaison arrondie de la poignée présente une extension de matière conçue pour venir en appui contre l'une des deux parois parallèles de la zone supérieure du pion, de façon à limiter la course de la poignée de fixation depuis la position de verrouillage et donc à marquer la position de déverrouillage de la poignée de fixation. La position de déverrouillage est atteinte lorsque l'extension de matière de l'extrémité de liaison arrondie vient en butée contre l'une des deux parois horizontales et parallèles de la zone supérieure du pion de montage.

Selon une caractéristique possible de l'invention, chacune des deux barres est allongée et possède à chacune de ses deux extrémités considérées suivant un axe longitudinal desdites barres, une poignée de fixation coopérant chacune avec un pion de montage solidarisé au toit.

Selon une caractéristique possible de l'invention, l'amplitude de rotation de la poignée de fixation pour passer de la position de verrouillage à la position de déverrouillage est comprise entre 90° et 135°. Autrement dit, la poignée de fixation doit subir une rotation de forte amplitude depuis sa position de verrouillage pour atteindre la position de déverrouillage. De cette manière, une personne manipulant ladite poignée de fixation ne peut pas atteindre la position de déverrouillage sans s'en rendre compte.

L'invention a pour autre objet un procédé de déverrouillage d'une barre de toit d'un véhicule conforme à l'invention, alors que la poignée de fixation est dans la position de verrouillage.

Selon l'invention, le procédé comprend les étapes suivantes :
- une étape de coopération entre une clé spécifique et une extrémité émergeante de la pièce cylindrique mobile en rotation formant la serrure, pour libérer en rotation la poignée de fixation se trouvant dans la position de verrouillage,
- une étape de mise en rotation manuelle de la poignée de fixation autour de l'axe de rotation, entrainant une mise en rotation des deux lèvres qui étaient insérées à force dans l'espace d'accueil délimité par les deux parois parallèles de la zone supérieure du pion,
- une étape de poursuite de la rotation de la poignée de fixation dans le même sens, ladite étape étant facilitée par le fait que la hauteur des deux lèvres qui sont insérées dans ledit espace d'accueil diminue progressivement,
- une étape d'arrêt de la rotation de la poignée de fixation lorsque l'extension de matière de l'extrémité de liaison arrondie de ladite poignée de fixation arrive en butée contre l'une des deux parois parallèles de la zone supérieure du pion de montage, cette étape d'arrêt se produisant alors que les deux lèvres se retrouvent à l'extérieur de l'espace d'accueil,
- une étape de retrait de la barre.

Un véhicule selon l'invention présente l'avantage de posséder un mécanisme de verrouillage et de déverrouillage des barres de toit qui est simple et rapide à utiliser, car il ne nécessite ni d'outils spécifiques ni de manipulations compliquées requérant de la force et/ou de la précision. De plus, ce mécanisme de verrouillage et de déverrouillage a l'avantage d'être inviolable grâce à la présence judicieuse d'une serrure peu encombrante et de géométrie simple, pouvant être déverrouillée au moyen d'une clé spécifique et personnelle que seul le propriétaire du véhicule possède.

On donne ci-après, une description détaillée d'un mode de réalisation préféré d'un véhicule selon l'invention, en se référant aux figures suivantes :
[Fig. 1] La figure 1 est une vue de côté d'une barre de toit d'un véhicule selon l'invention,
[Fig. 2] La figure 2 est une vue schématique en coupe d'une zone d'un véhicule selon l'invention, montrant un point de fixation d'une barre de toit sur le toit dudit véhicule, ledit point de fixation étant dans une position verrouillée,
[Fig. 3] La figure 3 est la vue de la figure 2, le point de fixation étant dans une position déverrouillée,
[Fig. 4] La figure 4 est une vue de côté d'une poignée de fixation d'une barre de toit d'un véhicule selon l'invention, dans trois positions différentes,
[Fig. 5] La figure 5 est une vue en perspective de la poignée de fixation de la figure 4,
[Fig. 6] La figure 6 est une vue en perspective d'une zone d'une barre de toit d'un véhicule selon l'invention, montrant la poignée de fixation dans une position déverrouillée,
[Fig. 7] La figure 7 est une vue en perspective d'une extrémité d'une barre de toit d'un véhicule selon l'invention, la poignée de fixation étant dans une position verrouillée,
[Fig. 8] La figure 8 est une vue en perspective d'une extrémité d'une barre de toit d'un véhicule selon l'invention, la poignée de fixation étant dans une position déverrouillée.

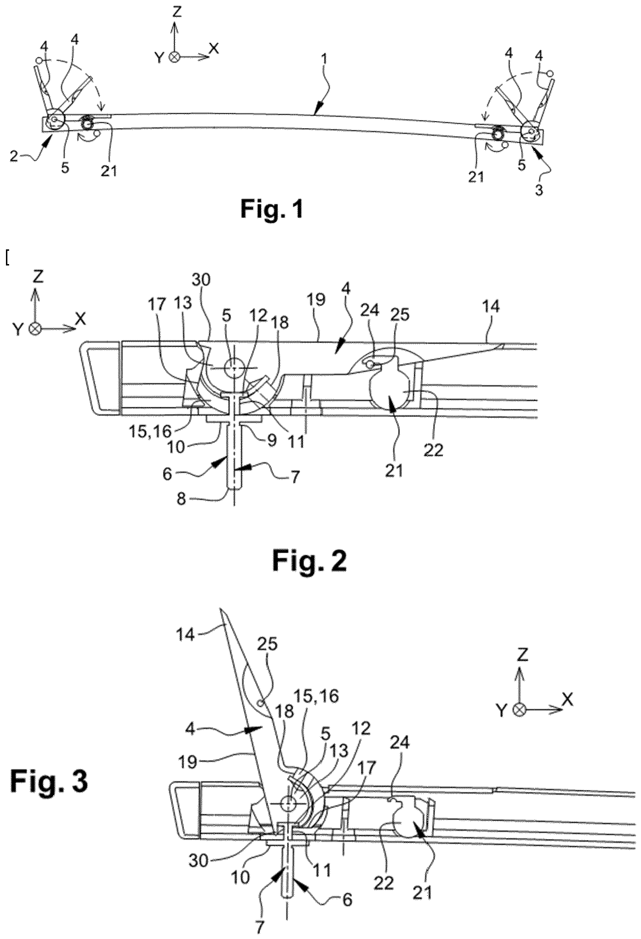

En se référant à la figure 1, un véhicule selon l'invention comprend deux barres de toit 1 fixées sur un toit dudit véhicule, lesdites deux barres de toit 1 pouvant occuper essentiellement deux positions :
- une position longitudinale pour laquelle elles sont parallèles et s'étendent le long d'un axe longitudinal X du véhicule, et
- une position transversale pour laquelle elles sont parallèles et s'étendent le long d'un axe transversal Y du véhicule.

Ces deux positions possibles des barres de toit 1 sur le toit du véhicule, augmentent les configurations de stockage d'objets, de bagages et/ou de marchandises sur ledit toit. Pour passer d'une position à l'autre, au moins une extrémité des barres de toit 1 doit d'abord être désolidarisée du toit, avant que les barres de toit ne soient positionnées puis fixées dans l'autre position.

En se référant à la figure 1, chaque barre de toit 1 est allongée et possèdent deux points de fixation 2, 3 au toit, placés aux extrémités de ladite barre de toit 1 considérées le long d'un axe longitudinal de celle-ci.

En se référant aux figures 1 et 2, chaque point de fixation 2, 3 de la barre de toit 1 sur le toit du véhicule comprend une poignée de fixation 4 montée mobile en rotation autour d'un axe 5 de la barre 1, et un pion de montage 6 fixé au toit du véhicule. Le pion de montage 6 présente un corps principal allongé 7 dont une première extrémité 8 est libre et dont une deuxième extrémité 9 se termine par une première paroi cylindrique 10 s'étendant dans un plan qui est perpendiculaire à un axe longitudinal du corps principal 7. Cette première paroi cylindrique 10 est prolongé par un corps secondaire 11 allongé, qui est dans la parfaite continuité du corps principal 7, et se terminant par une deuxième paroi cylindrique 12 s'étendant dans un plan qui est perpendiculaire à un axe longitudinal du corps secondaire 11 et dont le diamètre est inférieur à celui de la première paroi cylindrique 10. Autrement dit,
- la première paroi cylindrique 10 et la deuxième paroi cylindrique 12 sont parallèles, et s'étendent perpendiculairement au corps principal 7 et au corps secondaire 11,
- la première paroi cylindrique 10 sépare le corps principal 7 et le corps secondaire 11,
- la deuxième paroi cylindrique 12 constitue une extrémité du corps secondaire 11 et donc une extrémité du pion de montage 6,
- la première paroi cylindrique 10 et la deuxième paroi cylindrique 12 sont placées de façon coaxiale sur le corps principal 7 et sur le corps secondaire 11,

En se référant aux figures 2 et 3, chaque pion de montage 6 est fixé au toit du véhicule, de manière que :
- le corps principal 7 et le corps secondaire 11 s'étendent dans une direction verticale, et
- la première paroi cylindrique 10 et la deuxième paroi cylindrique 12 s'étendent horizontalement, ladite deuxième paroi cylindrique 12 étant placée au-dessus de la première paroi cylindrique 10. De cette manière, la première paroi cylindrique 10 constitue une paroi inférieure et la deuxième paroi cylindrique 12 constitue une paroi supérieure.

Plus précisément, les pions de montage 6 sont fixés dans des pièces support qui sont elles-mêmes fixées au toit. De cette manière, si le propriétaire du véhicule décidait de retirer les barres de toit 1 pour rouler sans lesdites barres de toit 1, il retirerait lesdites pièces support et les pions de montage 6 n'émergeraient pas dudit toit.

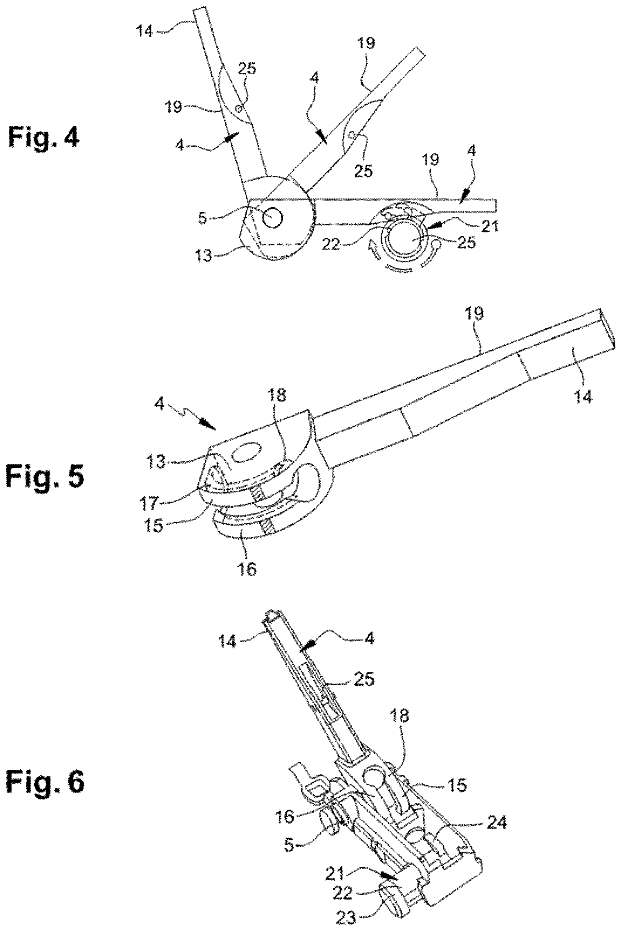

En se référant aux figures 2, 3, 4, 5 et 6, la poignée de fixation 4 est allongée et présente une première extrémité de liaison 13 arrondie, qui est montée en rotation autour de l'axe de rotation 5 de la barre de toit 1, et une deuxième extrémité libre 14, lesdites deux extrémités 13, 14 étant à considérer le long d'un axe longitudinal de ladite poignée de fixation 4. L'extrémité de liaison arrondie 13 comporte deux lèvres 15, 16 périphériques et parallèles en forme d'arc de cercle, lesdites deux lèvres 15, 16 ayant une longueur finie. Autrement dit, les deux lèvres 15, 16 ne s'étendent pas sur 360° autour de l'extrémité de liaison arrondie 13. Les deux lèvres 15, 16 sont identiques et possèdent chacune une hauteur variable, lesdites deux lèvres 15, 16 s'étendant entre une première extrémité 17 pour laquelle la hauteur est minimale et une deuxième extrémité 18 pour laquelle la hauteur est maximale. Entre la première extrémité 17 et la deuxième extrémité 18, la hauteur de chaque lèvre 15, 16 croît de façon progressive, la hauteur représentant la dimension desdites lèvres 15, 16 considérée le long d'un axe radial passant par le centre de l'axe de rotation 5 de la poignée de fixation.

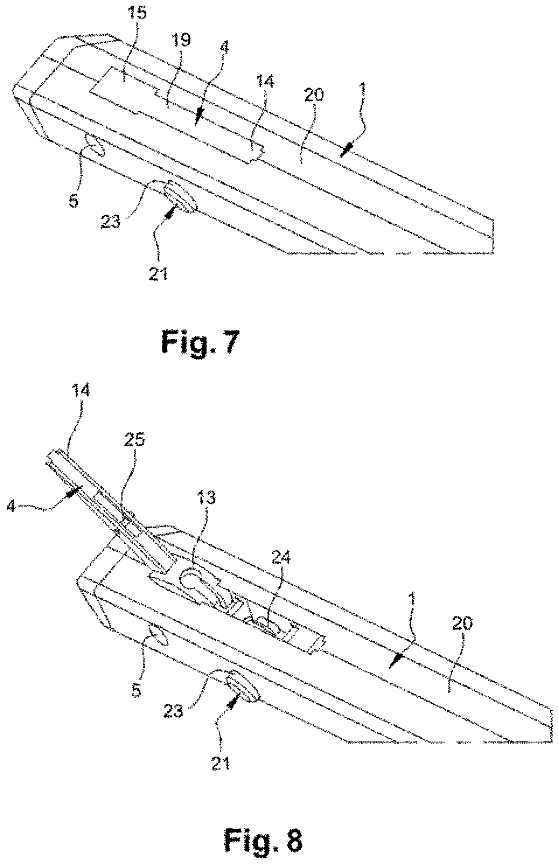

En se référant aux figures 2 et 3, chaque poignée de fixation 4 coopère avec un pion de montage 6, de sorte que les deux lèvres 15, 17 soient placées de part et d'autre du corps secondaire 11 en étant insérées entre la première paroi cylindrique 10 et la deuxième paroi cylindrique 12 dudit pion de montage. La poignée de fixation 4 peut ainsi passer par rotation autour de l'axe de rotation 5 :
- d'une position de verrouillage comme illustré aux figures 2 et 7, et pour laquelle elle arrime étroitement la barre de toit 1 au toit du véhicule,
- à une position de déverrouillage comme illustré aux figures 3 et 8 et pour laquelle elle permet le retrait de ladite barre de toit 1, dudit toit.

En se référant aux figures 2 et 7, dans la position de verrouillage, la poignée de fixation 4 s'étend horizontalement et s'insère complètement dans la barre de toit 1, de sorte qu'une surface supérieure 19 de ladite poignée de fixation 4 affleure une surface supérieure 20 de ladite barre de toit 1. Dans cette position de verrouillage, la hauteur du tronçon des deux lèvres 15, 16 qui est inséré entre la première paroi cylindrique 10 et la deuxième paroi cylindrique 12 du pion de montage 6, est suffisante pour que lesdites deux lèvres 15, 16 viennent en contact étroit avec lesdites deux parois cylindriques 10, 12 du pion de montage 6.

En se référant aux figures 3 et 8, une mise en rotation de la poignée de fixation 4 autour de l'axe de rotation 5, depuis la position de verrouillage, entraine un déplacement des deux lèvres 15, 16 relativement à la première paroi cylindrique 10 et à la deuxième paroi cylindrique 12 du pion de montage 6, dans un sens pour laquelle la hauteur du tronçon desdites lèvres 15, 16 qui est inséré entre lesdites parois cylindriques 10, 12, diminue progressivement. De cette manière, les deux lèvres 15, 16 perdent progressivement le contact avec la première paroi cylindrique 10 alors qu'elles demeurent toujours au contact de la deuxième paroi cylindrique 12. La rotation de la poignée de fixation 4 se poursuit jusqu'à ce que la poignée de fixation 4 atteigne la position de déverrouillage, pour laquelle la première extrémité 17 de chaque lèvre 15, 17 est sorti d'un espace délimité par les deux parois cylindriques 10, 12 du pion de montage 6. Cette position de déverrouillage est atteinte après une rotation de plus de 90° de la poignée de fixation 4 depuis la position de verrouillage. Puisque dans la position de déverrouillage la poignée de fixation 4 n'est plus retenue par le pion de montage 6, les deux lèvres 15, 16 n'étant plus insérées entre les deux parois cylindriques 10, 12 du pion de montage 6, la barre de toit 1 peut alors être écartée du toit avant d'être retirée de celui-ci.

Il est à noter que le mouvement de la poignée de fixation 4 est réversible pour permettre à celle-ci de passer de la position de déverrouillage à la position de verrouillage. Il faut fournir un certain effort pour placer la poignée de fixation dans la position de verrouillage, car durant le mouvement de rotation de celle-ci, la hauteur du tronçon desdites lèvres 15, 16 qui est inséré entre les deux parois cylindriques 10, 12 du pion de montage 6, croit progressivement. Le tronçon finit par venir au contact desdites parois cylindriques 10, 12, l'atteinte de la position de verrouillage s'effectuant au prix d'un certain effort pour coincer ledit tronçon dont la hauteur augmente, entre ces deux parois cylindriques 10, 12.

En se référant aux figures 2, 3, 4, 6, 7 et 8, à chaque poignée de fixation 4 de la barre de toit est associée une serrure 21 sous la forme d'une pièce sensiblement cylindrique 22 apte à pivoter autour de son axe de révolution. Cette pièce cylindrique 22 est solidarisée à la barre de toit 1 en s'étendant selon une direction transversale de ladite barre de toit 1, considérée par rapport à un axe longitudinal de celle-ci. Une fois montée dans la barre de toit 1, la pièce cylindrique 22 matérialisant la serrure 21 présente une extrémité 23 qui émerge de ladite barre de toit 1. La pièce cylindrique 22 formant la serrure 21 possède une excroissance 24 sous la forme d'une paroi incurvée formant un crochet prenant naissance sur une zone supérieure de ladite pièce cylindrique 22. La poignée de fixation 4 possède une gâche 25 sous la forme d'une tige s'étendant selon une direction transversale de ladite poignée 4 considérée par rapport à un axe longitudinal de celle-ci.

Lorsque la poignée de fixation passe de la position de déverrouillage comme illustré aux figures 3, 6, 8 à la position de verrouillage comme illustré aux figures 2 et 7, la gâche 25 vient se placer à côté et sous le crochet 24 de la pièce cylindrique 22 formant serrure 21. Une clé spécifique et personnelle, que seul le propriétaire du véhicule détient, est entrée manuellement dans une ouverture de l'extrémité 23 émergeante de la pièce cylindrique 22 formant serrure 21, permet de faire pivoter ladite pièce cylindrique 22 jusqu'à ce que la paroi incurvée 24 vienne s'accrocher à la gâche 25 de la poignée de fixation 4, comme cela est illustré à la figure 2. La clé spécifique est alors retirée de l'extrémité 23 émergeante de la pièce cylindrique 22 formant serrure 21, alors que ladite serrure 21 bloque la poignée de fixation 4 dans la position de verrouillage. La poignée de fixation 4 est alors verrouillée dans la position de verrouillage, sans possibilité d'être manipulée pour être amenée dans la position de déverrouillage, puisque ladite poignée de fixation 4 ne laisse subsister aucun jeu avec la barre de toit 1 lorsqu'elle est dans la position de verrouillage. Pour libérer en rotation la poignée de fixation 4, il suffit de réintroduire la clé spécifique dans l'ouverture de l'extrémité 23 émergeante de la pièce cylindrique 22 formant serrure 21, puis de provoquer une rotation de ladite pièce cylindrique 22 en sens inverse afin de libérer la gâche 25 de la paroi incurvée 24 formant un crochet. La poignée de fixation 4 peut alors être à nouveau mise en rotation pour atteindre la position de déverrouillage.

En se référant aux figures 2 et 3, l'extrémité de liaison arrondie 13 de la poignée de fixation 4 comprend une excroissance de matière 30 conçue pour venir en butée contre la deuxième paroi cylindrique 12 du pion de montage 6, lorsque la poignée de fixation 4 est mise en rotation depuis la position de verrouillage pour atteindre la position de déverrouillage. En effet, une mise en butée de ladite excroissance de matière 30 contre la deuxième paroi cylindrique 12 signifie que la position de déverrouillage a été atteinte par la poignée de fixation 4.

Un procédé de déverrouillage d'une barre de toit 1 d'un véhicule selon l'invention, alors que la poignée de fixation 4 est dans la position de verrouillage, comprend les étapes suivantes :
- une étape d'introduction de la clé spécifique dans une ouverture de l'extrémité émergeante 23 de la pièce cylindrique 22 formant la serrure 21, pour désengager la gâche 25 du crochet 24 et libérer en rotation la poignée de fixation 4 se trouvant dans la position de verrouillage,
- une étape de mise en rotation manuelle de la poignée de fixation 4 autour de l'axe de rotation 5, entrainant une mise en rotation des deux lèvres 15, 16 qui étaient insérées à force entre les deux parois cylindriques 10, 12 du pion de montage 6,
- une étape de poursuite de la rotation de la poignée de fixation 4 dans le même sens, ladite étape étant facilitée par le fait que la hauteur du tronçon des deux lèvres 15, 16 qui est inséré entre lesdites parois cylindriques 10, 12 diminue progressivement,
- une étape d'arrêt de la rotation de la poignée de fixation 4 lorsque l'extension de matière 30 de l'extrémité de liaison arrondie 13 de ladite poignée de fixation 4 arrive en butée contre l'une des deux parois cylindriques 10, 12 du pion de montage 6, cette étape d'arrêt se produisant alors que les deux lèvres 15, 16 se retrouvent à l'extérieur de l'espace compris entre lesdites parois cylindriques 10, 12,
- une étape de retrait de la barre.

## Revendications

1. Véhicule (1) comprenant un toit, une première barre (1) et une deuxième barre (1) fixées chacune sur ledit toit, lesdites deux barres (1) étant déplaçables entre une position longitudinale pour laquelle elles s'étendent chacune suivant un axe longitudinal X du véhicule et une position transversale pour laquelle elles s'étendent chacune suivant un axe transversal Y du véhicule, **caractérisé en ce que** :
- chacune des barres (1) est fixée au toit par l'intermédiaire d'au moins un pion de montage (6) solidarisé au toit et s'étendant verticalement, une zone supérieure dudit pion de montage (6) se terminant par deux parois parallèles (10, 12) et écartées s'étendant horizontalement, ladite zone supérieure émergeant dudit toit,
- chaque barre (1) comporte une poignée de fixation (4) allongée dont une extrémité de liaison arrondie (13) est montée en rotation autour d'un axe de rotation (5) horizontal de la barre (1), ladite extrémité de liaison arrondie (13) comportant deux lèvres (15, 16) périphériques et parallèles en forme d'arc de cercle, lesdites deux lèvres (15, 16) ayant une hauteur variant progressivement entre une première extrémité (17) pour laquelle la hauteur est minimale et une deuxième extrémité (18) pour laquelle la hauteur est maximale, la poignée de fixation (4) coopérant avec le pion de montage (6) de sorte que les deux lèvres (15, 16) soient insérées dans un espace d'accueil ménagé entre les deux parois parallèles (10, 12) de la zone supérieure du pion de montage (6),
et **en ce que** ladite poignée de fixation (4) peut passer par pivotement autour de l'axe de rotation (5) d'une position de verrouillage pour laquelle un tronçon des deux lèvres (15, 16) compris entre la première extrémité (17) et la deuxième extrémité (18) est inséré à force dans l'espace d'accueil, à une position de déverrouillage pour laquelle les deux lèvres (15, 16) ont pivoté autour dudit axe de rotation (5) jusqu'à ce que les premières extrémités (17) desdites deux lèvres (15, 16) se retrouvent à l'extérieur dudit espace d'accueil.

2. Véhicule selon l'une quelconque des revendications 1 ou 2, **caractérisé en ce que** les deux parois parallèles (10, 12) et écartées de la zone supérieure du pion de montage (6) sont constituées d'une paroi supérieure (12) et d'une paroi inférieure (10) qui est placée en-dessous de la paroi supérieure (12), et **en ce que** lesdites deux parois (10, 12) sont de forme cylindrique, le diamètre de la paroi supérieure (12) étant inférieur à celui de la paroi inférieure (10).

3. Véhicule selon l'une quelconque des revendications 1 ou 2, **caractérisé en ce que** chaque lèvre (15, 16) possède une section transversale rectangulaire.

4. Véhicule selon l'une quelconque des revendications 1 ou 2, **caractérisé en ce que** la poignée de fixation (4) est rectiligne, et **en ce que** dans la position de verrouillage ladite poignée de fixation (4) s'étend horizontalement en arasant une surface supérieure (20) de la barre (1) sans laisser subsister de jeu avec ladite surface supérieure (20).

5. Véhicule selon la revendication 4 **caractérisé en ce que** la poignée de fixation (4) comprend une gâche (25) et la barre (1) comprend une serrure (21) sous la forme d'une pièce cylindrique mobile en rotation et prolongé par une paroi incurvée (24) formant un crochet, et **en ce qu'**une une clé spécifique et personnelle introduite dans la serrure (21) permet de faire pivoter la pièce cylindrique (21) de sorte que la paroi incurvée (24) vienne se placer sur ladite gâche (25) lorsque la poignée (4) est dans la position de verrouillage avant que ladite clé ne soit retirée.

6. Véhicule selon la revendication 5, **caractérisé en ce que** la pièce cylindrique (22) mobile formant la serrure (21) présente une extrémité (23) qui émerge de la barre (1), et **en ce que** la clé spécifique et personnelle est conçue pour coopérer avec ladite extrémité émergeante (23) pour libérer ou bloquer la poignée de fixation (4) dans la position de verrouillage.

7. Véhicule selon l'une quelconque des revendications 1 à 6, **caractérisé en ce que** l'extrémité de liaison arrondie (13) de la poignée (4) présente une extension (30) de matière conçue pour venir en appui contre l'une des deux parois parallèles (10, 12) de la zone supérieure du pion de montage (6) de façon à limiter la course de la poignée (4) depuis la position de verrouillage et donc à marquer la position de déverrouillage de la poignée (4).

8. Véhicule selon la revendication 1, **caractérisé en ce que** chacune des deux barres (1) est allongée et possède à chacune de ses deux extrémités considérées suivant un axe longitudinal desdites barres (1), une poignée de fixation (4) coopérant chacune avec un pion de montage (6) solidarisé au toit.

9. Véhicule selon l'une quelconque des revendications 1 à 8, **caractérisé en ce que** l'amplitude de rotation de la poignée de fixation (4) pour passer de la position de verrouillage à la position de déverrouillage est comprise entre 90° et 135°.

10. Procédé de déverrouillage d'une barre (1) de toit d'un véhicule conforme à l'une quelconque des revendications 1 à 9 alors que la poignée de fixation (4) est dans la position de verrouillage, **caractérisé en ce qu'**il comprend les étapes suivantes :
- une étape de coopération entre une clé spécifique et une extrémité émergeante (23) de la pièce cylindrique (22) mobile en rotation formant la serrure, pour libérer en rotation la poignée de fixation (4) se trouvant dans la position de verrouillage,
- une étape de mise en rotation manuelle de la poignée de fixation (4) autour de l'axe de rotation (5), entrainant une mise en rotation des deux lèvres (15, 16) qui étaient insérées à force dans l'espace d'accueil délimité par les deux parois parallèles (10, 12) de la zone supérieure du pion de montage (6),
- une étape de poursuite de la rotation de la poignée de fixation (4) dans le même sens, ladite étape étant facilitée par le fait que la hauteur des deux lèvres qui sont insérées dans ledit espace d'accueil diminue progressivement,
- une étape d'arrêt de la rotation de la poignée de fixation lorsque l'extension de matière (30) de l'extrémité de liaison arrondie (13) de ladite poignée de fixation (4) arrive en butée contre l'une des deux parois parallèles (10, 12) de la zone supérieure du pion de montage (6), cette étape d'arrêt se produisant alors que les deux lèvres (15, 16) se retrouvent à l'extérieur de l'espace d'accueil,
- une étape de retrait de la barre (1).
